# EUROPÄISCHE PATENTANMELDUNG

(11) **EP 2 579 116 A2**
(43) Veröffentlichungstag der Anmeldung: **10.04.2013**
(21) Anmeldenummer: 12183990.6
(22) Anmeldetag: 12.09.2012
(51) Int. Cl.: G05B 19/042

(54) **Verfahren zur Sicherstellung des autorisierten Zugriffs auf ein Feldgerät der Automatisierungstechnik**

(30) Priorität: 04.10.2011 DE 102011083984
(71) Anmelder: Endress + Hauser Process Solutions AG, 4153 Reinach (CH)
(72) Erfinder: Pöschmann, Axel, 4057 Basel (CH); Birgel, Eric, 79650 Schopfheim (DE); Wyss, Juerg, 4107 Ettingen (CH)
(74) Vertreter: Andres, Angelika Maria

(57) **Zusammenfassung**

Die Erfindung betrifft ein Verfahren zur Sicherstellung des autorisierten Zugriffs auf ein Feldgerät (1) der Automatisierungstechnik, wobei das Feldgerät (1) eine Internetprotokollfähige Systemschnittstelle (2) und eine Schnittstelle (3) für die Nahfeldkommunikation aufweist, wobei das Verfahren die folgenden Verfahrensschritte aufweist:
- Vor Auslieferung des Feldgeräts (1) von einem Feldgeräte-Lieferanten an einen Feldgeräte-Nutzer wird werksseitig ein individueller Zugangscode für einen autorisierten Feldgeräte-Nutzer in dem Feldgerät (1) hinterlegt oder dem Feldgerät (1) eindeutig zugeordnet;
- Mit einer mobilen Serviceeinheit (4) wird unter Verwendung einer vom Feldgeräte-Lieferanten bereitgestellten Sicherheitsapplikation (Security App) der werksseitig hinterlegte individuelle Zugangscode über die Schnittstelle (3) für die Nahfeldkommunikation aus dem Feldgerät (1) ausgelesen oder über alternative gesicherte Kommunikationswege bereitgestellt;
- mit der Sicherheitsapplikation (Security App) wird eine Zugriffsberechtigung für das Feldgerät (1) für zumindest einen autorisierten Feldgeräte-Nutzer eingerichtet;
- Über die mobile Serviceeinheit (4) oder die Internetprotokollfähige Systemschnittstelle (2) erfolgt die Bedienung des Feldgeräts (1) durch den autorisierten Feldgeräte-Nutzer entsprechend der eingerichteten Zugriffsberechtigung.

## Beschreibung

Die Erfindung betrifft ein Verfahren zur Sicherstellung des autorisierten Zugriffs auf ein Feldgerät der Automatisierungstechnik, wobei das Feldgerät eine Internetprotokollfähige Systemschnittstelle und eine Schnittstelle für die Nahfeldkommunikation aufweist.

In der Automatisierungstechnik, insbesondere in der Prozess- und Fabrikautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die auf der Feldebene angeordnet sind. Oftmals redet man in diesem Zusammenhang auch von Netzwerkkomponenten. Eine Vielzahl solcher Feldgeräte oder Netzwerkkomponenten wird von der Firma Endress + Hauser hergestellt und vertrieben.

In modernen Industrieanlagen erfolgt die Kommunikation zwischen zumindest einer übergeordneten Steuereinheit und den Feldgeräten in der Regel über ein Bussystem, wie beispielsweise Profibus® PA, Foundation Fieldbus® oder HART®. Die Bussysteme können sowohl drahtgebunden als auch drahtlos ausgestaltet sein. Die übergeordnete Steuereinheit dient zur Prozesssteuerung, zur Prozessvisualisierung, zur Prozessüberwachung sowie zur Inbetriebnahme und Bedienung der Feldgeräte und wird auch als Konfigurier-/Managementsystem bezeichnet. Programme, die auf übergeordneten Einheiten eigenständig ablaufen, sind beispielsweise das Bedientool FieldCare der Firmengruppe Endress+Hauser, das Bedientool Pactware, das Bedientool AMS von Fisher-Rosemount oder das Bedientool PDM von Siemens. Bedientools, die in Leitsystem-Anwendungen integriert sind, sind das PCS7 von Siemens, das Symphony von ABB und das Delta V von Emerson. Unter dem Begriff Bedienen von Feldgeräten wird insbesondere das Konfigurieren und Parametrieren von Feldgeräten, aber auch die Diagnose zwecks frühzeitiger Erkennung von Fehlern an einem der Feldgeräte oder im Prozess verstanden. Ebenso beinhaltet der Begriff Bedienen im Zusammenhang mit der Erfindung im einfachsten Fall die bloße Darstellung von Information.

Immer mehr Feldgeräte bzw. die Netzwerkkomponenten weisen Internetprotokollfähige Systemschnittstellen auf. Internetprotokollfähige Schnittstellen sind im Hinblick auf die hohen Sicherheitsanforderungen in einer Automatisierungsanlage potenzielle Schwachstellen, da sie einen unbefugten Zugang zu dem Feldgerät möglich machen. Hinzu kommt, dass es heutzutage üblich ist, Feldgeräte und Netzwerkkomponenten entweder gänzlich ohne oder mit Default-Zugangsdaten, wie User, Passwort, IP-Adresse auszuliefern. Die Default-Zugangsdaten werden üblicherweise nicht geändert.

Nachteilig bei der heutigen Lösung ist, dass die werksseitigen Einstellungen für den Zugangsschutz nicht geheim und somit auch nicht sicher sind. Auch wird üblicherweise nach Abschluss der Inbetriebnahme keine Änderung der Zugangsdaten vorgenommen. Selbst eine Benutzerverwaltung nach FDA, die einen Nutzer und ein Passwort erfordert, schließt keine gegenseitige Authentifizierung (Zertifikate) der verschlüsselten Kommunikation ein.

Darüber hinaus wird die Internetprotokollfähige Schnittstelle heute oft als Systemschnittstelle und Serviceschnittstelle benutzt, über die die Änderungen der Zugangsdaten vorgenommen werden. Diese Schnittstelle stellt somit eine potenzielle Gefahrenquelle dar, da es einem nicht-autorisierten Dritten möglich ist, sich über die Internetprotokollfähige Schnittstelle Zugang zu dem Feldgerät und dem Netzwerk, in das es eingebunden ist, zu verschaffen und beispielsweise den Datenverkehr abzuhören.

Der Erfindung liegt die Aufgabe zugrunde, ein Verfahren vorzuschlagen, das ausschließlich einen autorisierten Zugriff auf ein Feldgerät erlaubt. Unter dem Begriff Zugriff auf das Feldgerät ist in der Verbindung mit der Erfindung der Lese- und/oder Schreibzugriff zu verstehen.

Die Aufgabe wird durch das erfindungsgemäße Verfahren gelöst, das die folgenden Verfahrensschritte aufweist:
- Vor Auslieferung des Feldgeräts von einem Feldgeräte-Lieferanten an einen Feldgeräte-Nutzer wird werksseitig ein individueller Zugangscode für einen autorisierten Feldgeräte-Nutzer in dem Feldgerät hinterlegt oder dem Feldgerät eindeutig zugeordnet;
- Mit einer mobilen Serviceeinheit wird unter Verwendung einer vom Feldgeräte-Lieferanten bereitgestellten Sicherheitsapplikation (Security App) der werksseitig hinterlegte individuelle Zugangscode über die Schnittstelle für die Nahfeldkommunikation aus dem Feldgerät ausgelesen oder über alternative gesicherte Kommunikationswege bereitgestellt;
- mit der Sicherheitsapplikation (Security App) wird eine Zugriffsberechtigung für das Feldgerät für zumindest einen autorisierten Feldgeräte-Nutzer eingerichtet;
- Über die mobile Serviceeinheit oder die Internetprotokollfähige Systemschnittstelle erfolgt die Bedienung des Feldgeräts durch den autorisierten Feldgeräte-Nutzer entsprechend der eingerichteten Zugriffsberechtigung.

Zusammengefasst wird es durch die Erfindung möglich, einen autorisierten Zugriff auf das Feldgerät ab Herstellerwerk sicherzustellen. Hierzu werden neben dem internetprotokollfähigen Übertragungskanal ein verschlüsselter Nahfeldkommunikationskanal und eine mobile Recheneinheit verwendet.

Für die Nahfeldkommunikation wird beispielsweise die RFID Technologie, eine Nahfeldkommunikationstechnik oder die Bluetooth-Technologie eingesetzt. Als mobile Serviceeinheit kommt beispielsweise ein iPhone, ein iPad, ein Android Tablet oder ein proprietäres Bedientool, wie beispielsweise FieldExpert, zum Einsatz.

Eine vorteilhafte Ausgestaltung des erfindungsgemäßen Verfahrens schlägt vor, dass in der Sicherheitsapplikation, der sog. Security App, ein Schlüssel für die gesicherte Nahfeldkommunikation zwischen der mobilen Serviceeinheit und dem Feldgerät hinterlegt ist. Die mobile Serviceeinheit liest den Zugangscode für die gesicherte Nahkommunikationsschnittstelle über die Sicherheitsapplikation aus.

Weiterhin ist vorgesehen, dass mittels der Sicherheitsapplikation (Security App) die Benutzerverwaltung für das Feldgerät eingerichtet und/oder ein entsprechendes Client-Zertifikat für den gesicherten Zugriff auf das Feldgerät hinterlegt werden/wird.

Eine vorteilhafte Ausgestaltung des erfindungsgemäßen Verfahrens sieht vor, dass die Internetprotokollfähige Systemschnittstelle so ausgestaltet wird, dass eine verschlüsselte, Nutzer- und Lieferantenseitig authentifizierte Kommunikation sichergestellt ist. Diese erfolgt z.B. über PIN und TAN.

Darüber hinaus wird im Zusammenhang mit der Erfindung vorgeschlagen, dass zumindest ein Client-Zertifikat für zumindest einen autorisierten SoftwareClient, z.B. das Bedientool FieldCare, vom Lieferanten vor Auslieferung in das Feldgerät übertragen bzw. dem Feldgerät zugeordnet wird, so dass eine beidseitig authentifizierte Verschlüsselung initial bereits vorhanden ist.

Bevorzugt ist desweiteren vorgesehen, dass die mobile Serviceeinheit das zumindest eine Client-Zertifikat des Feldgeräts externen Keystores für Kundensoftware von Drittanbietern zur Verfügung stellt.

Als vorteilhaft wird es im Zusammenhang mit der Erfindung angesehen, wenn das zumindest eine Client-Zertifikat über die drahtlose oder die drahtgebundene Systemschnittstelle an die externen Keystores übermittelt wird.

Die Vorteile der erfindungsgemäßen Lösung werden nachfolgend aufgelistet:
- es wird eine lückenlose Sicherheit für das Feldgerät bzw. die Netzwerkkomponente über den Lebenszyklus erreicht, da erst nach Vorliegen der Benutzerverwaltung und nach Hinterlegung der Zertifikate ein Zugriff über die Internetprotokollfähige Systemschnittstelle möglich ist.
- Die bislang gebräuchlichen Standard-Passwörter werden durch individuelle Passwörter ersetzt; die Änderung der initialen Zugangsdaten erfolgt über einen zweiten gesicherten Kommunikationskanal.
- Für die Systemschnittstelle ist eine verschlüsselte Client- und Serverseitig authentifizierte Kommunikation möglich bzw. sichergestellt.
- Zu jedem Zeitpunkt kann nur ein autorisierter Zugriff auf das Feldgerät mit definierten Lese- und/oder Schreibrechten stattfinden.
- Durch Überprüfen von Clientzertifikaten können DoS (Denial of Service) Angriffe frühzeitig und nachhaltig abgewehrt werden, so dass durch die erfindungsgemäße Lösung die Robustheit des Netzwerks erheblich erhöht wird.

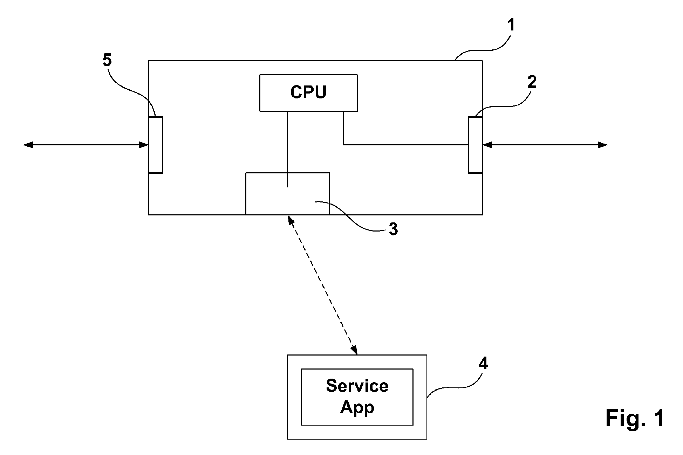

Die Erfindung wird anhand der Fig. 1 näher erläutert. Fig. 1 zeigt eine Ausgestaltung eines Feldgeräts 1, mit dem das erfindungsgemäße Verfahren durchführbar ist.

Über eine Feldbusschnittstelle 5 ist das Feldgerät in ein Feldbussystem eingebunden. Das Feldbussystem ist in Fig. 1 nicht gesondert dargestellt. Über das Feldbussystem unterschiedliche Typen wurden bereits beispielhaft genannt - kommuniziert das Feldgerät 1 mit weiteren Feldgeräten und/oder mit einer gleichfalls in Fig. 1 nicht dargestellten übergeordneten Steuereinheit. Beispiele für entsprechende Steuereinheiten sind ebenfalls bereits in der Beschreibungseinleitung genannt worden. Die Feldbusschnittstelle 5 kann sowohl drahtlos als auch drahtgebunden ausgestaltet sein.

Weiterhin weist das Feldgerät 1 eine Internetprotokollfähige Systemschnittstelle 2 und eine Schnittstelle 3 für die Nahfeldkommunikation auf. Über die Internetprotokollfähige Systemschnittstelle 2 ist das Feldgerät 1 über eine IP Adresse ansprechbar. Diese Systemschnittstelle 2 wird erfindungsgemäß so gesichert, dass ausschließlich autorisierte Zugriffe auf das Feldgerät 1 möglich sind.

In einer alternativen Ausgestaltung weist das Feldgerät 1 lediglich eine internetprotokollfähige Systemschnittstelle 2 aufweist. Die Feldbusschnittstelle 5 ist üblicherweise nur vorgesehen, wenn die Feldgeräte auf der Feldebene mit einer übergeordneten Steuereinheit über eine Prozesszugriffseinheit (PAP) oder ein Gateway kommunizieren. Die Kommunikation über die Internetprotokollfähige Schnittstelle 2 erfolgt über Funkt oder drahtgebunden.

Über die Nahfeldkommunikationsschnittstelle 3 erfolgt die Inbetriebnahme des Feldgeräts 1 in der Automatisierungsanlage. Für die Nahfeldkommunikation kommt beispielsweise die RFID Technologie, eine Nahfeldkommunikationstechnik oder die Bluetooth-Technologie zum Einsatz.

Das erfindungsgemäße Verfahren umfasst die folgenden Schritte:
1. Vor Auslieferung des Feldgeräts 1 von einem Feldgeräte-Lieferanten an einen Feldgeräte-Nutzer wird/werden werksseitig ein individueller Zugangscode bzw. individuelle Zugangsdaten für einen autorisierten Feldgeräte-Nutzer in dem Feldgerät 1 hinterlegt oder dem Feldgerät 1 eindeutig zugeordnet.
2. Mit einer mobilen Serviceeinheit 4 wird unter Verwendung einer vom Feldgeräte-Lieferanten bereitgestellten Sicherheitsapplikation, einer sog. Security App der werksseitig hinterlegte individuelle Zugangscode über die Schnittstelle 3 für die Nahfeldkommunikation aus dem Feldgerät 1 ausgelesen oder über alternative gesicherte Kommunikationswege bereitgestellt. Als mobile Serviceeinheit 4 wird beispielsweise ein iPhone, ein iPad, ein Android Tablet oder ein proprietäres Bedientool, wie beispielsweise FieldExpert, verwendet.
3. Mit der Sicherheitsapplikation wird eine Zugriffsberechtigung für das Feldgerät 1 für zumindest einen autorisierten Feldgeräte-Nutzer eingerichtet.
4. Über die mobile Serviceeinheit 4 oder die Internetprotokollfähige Sytemschnittstelle 2 erfolgt die Bedienung des Feldgeräts 1 durch den autorisierten Feldgeräte-Nutzer entsprechend der eingerichteten Zugriffsberechtigung.

## Patentansprüche

1. Verfahren zur Sicherstellung des autorisierten Zugriffs auf ein Feldgerät (1) der Automatisierungstechnik, wobei das Feldgerät (1) eine Internetprotokollfähige Systemschnittstelle (2) und eine Schnittstelle (3) für die Nahfeldkommunikation aufweist, wobei das Verfahren die folgenden Verfahrensschritte aufweist:
- Vor Auslieferung des Feldgeräts (1) von einem Feldgeräte-Lieferanten an einen Feldgeräte-Nutzer wird werksseitig ein individueller Zugangscode für einen autorisierten Feldgeräte-Nutzer in dem Feldgerät (1) hinterlegt oder dem Feldgerät (1) eindeutig zugeordnet;
- Mit einer mobilen Serviceeinheit (4) wird unter Verwendung einer vom Feldgeräte-Lieferanten bereitgestellten Sicherheitsapplikation (Security App) der werksseitig hinterlegte individuelle Zugangscode über die Schnittstelle (3) für die Nahfeldkommunikation aus dem Feldgerät (1) ausgelesen oder über alternative gesicherte Kommunikationswege bereitgestellt;
- mit der Sicherheitsapplikation (Security App) wird eine Zugriffsberechtigung für das Feldgerät (1) für zumindest einen autorisierten Feldgeräte-Nutzer eingerichtet;
- Über die mobile Serviceeinheit (4) oder die Internetprotokollfähige Systemschnittstelle (2) erfolgt die Bedienung des Feldgeräts (1) durch den autorisierten Feldgeräte-Nutzer entsprechend der eingerichteten Zugriffsberechtigung.

2. Verfahren nach Anspruch 1,
wobei für die Nahfeldkommunikation beispielsweise die RFID Technologie, eine Nahfeldkommunikationstechnik oder die Bluetooth-Technologie eingesetzt wird.

3. Verfahren nach Anspruch 1 oder 2,
wobei als mobile Serviceeinheit (4) beispielsweise ein iPhone, ein iPad, ein Android Tablet oder ein proprietäres Bedientool, wie beispielsweise FieldExpert, eingesetzt wird.

4. Verfahren nach einem oder mehreren der Ansprüche 1-3,
wobei in der Sicherheitsapplikation (Security App) ein Schlüssel für die gesicherte Nahfeldkommunikation zwischen der mobilen Serviceeinheit (4) und dem Feldgerät (1) hinterlegt ist, und wobei die mobile Serviceeinheit (4) den Zugangscode für die gesicherte Nahkommunikationsschnittstelle (3) über die Sicherheitsapplikation (Security App) ausliest.

5. Verfahren nach einem oder mehreren der vorhergehenden Ansprüche,
wobei mittels der Sicherheitsapplikation (Security App) die Benutzerverwaltung für das Feldgerät (1) eingerichtet und/oder ein entsprechendes Client-Zertifikat für den gesicherten Zugriff auf das Feldgerät (1) hinterlegt werden/wird.

6. Verfahren nach einem oder mehreren der vorhergehenden Ansprüche,
wobei die Internetprotokollfähige Systemschnittstelle (2) so ausgestaltet wird, dass eine verschlüsselte, Nutzer- und Lieferantenseitig authentifizierte Kommunikation sichergestellt wird.

7. Verfahren nach Anspruch 5 oder 6,
wobei zumindest ein Client-Zertifikat für zumindest einen autorisierten SoftwareClient, z.B. das Bedientool FieldCare, vom Lieferanten vor Auslieferung in das Feldgerät (1) übertragen bzw. dem Feldgerät (1) zugeordnet wird, so dass eine beidseitig authentifizierte Verschlüsselung initial vorhanden ist.

8. Verfahren nach einem oder mehreren der vorhergehenden Ansprüche,
wobei die mobile Serviceeinheit (4) das zumindest eine Client-Zertifikat des Feldgeräts (1) externen Keystores für Kundensoftware von Drittanbietern zur Verfügung stellt.

9. Verfahren nach Anspruch 8,
wobei das zumindest eine Client-Zertifikat über die drahtlose oder die drahtgebundene Systemschnittstelle (6) an die externen Keystores übermittelt wird.
